# EUROPÄISCHE PATENTSCHRIFT

(11) **EP 2 125 251 B1**
(45) Veröffentlichungstag und Bekanntmachung des Hinweises auf die Patenterteilung: **23.11.2011**
(21) Anmeldenummer: 08700533.6
(22) Anmeldetag: 29.01.2008
(51) Int. Cl.: B05D 1/00, B05D 7/00, C23C 14/02, G02B 1/10, G02B 1/11, C08J 7/16, C08J 7/18

(54) **BESCHICHTUNGSVERFAHREN FÜR OPTISCHE KUNSTSTOFFSUBSTRATE**
COATING METHOD FOR OPTICAL PLASTIC SUBSTRATES
PROCÉDÉ DE REVÊTEMENT D'UN SUBSTRAT EN MATIÈRE PLASTIQUE OPTIQUE

(30) Priorität: 02.02.2007 CH 180072007
(43) Veröffentlichungstag der Anmeldung: 02.12.2009
(73) Patentinhaber: Satisloh Photonics Ag, 8812 Horgen (CH)
(72) Erfinder: BREME, Frank, CH-8915 Hausen am Albis (CH); WETTER, Alex, CH-8800 Thalwil (CH)
(74) Vertreter: Schaad, Balass, Menzl & Partner AG
(86) Internationale Anmeldenummer: PCT/CH2008/000028
(87) Internationale Veröffentlichungsnummer: WO 2008/092288

(56) Entgegenhaltungen:
- WO-A-2006/084531
- US-A- 4 200 681
- US-A- 4 218 508
- US-A- 4 842 941
- US-A- 5 015 523
- US-A- 6 077 569
- US-B1- 6 376 064

## Beschreibung

Die vorliegende Erfindung betrifft ein Verfahren zur Beschichtung optischer Kunststoffsubstrate gemäss dem Oberbegriff des Anspruchs 1, eine Vorrichtung zur Durchführung des Verfahren gemäss dem Anspruch 15 und eine nach dem Verfahren hergestellte Beschichtung gemäss Anspruch 19.

Optische Beschichtungen, beispielsweise für Ent- und Verspiegelungen, optische Filter und andere Vergütungen, werden vorzugsweise mit Vakuumbeschichtungsverfahren, zu denen unter anderem das Bedampfen (Vapour Deposition VD), die chemische Gasphasenabscheidung (Chemical Vapour Deposition CVD) und das Sputtern (Physical Vapour Deposition PVD) zählen, hergestellt. Mit Hilfe dieser Beschichtungsverfahren werden typischerweise anorganische Schichten mit "keramischen" Eigenschaften auf Substrate, beispielsweise aus Glas, Kunststoff oder Mineralien, aufgebracht.

Diese Schichten haften häufig nur unbefriedigend auf Kunststoffsubstraten und sind aufgrund ihrer mechanischen und/oder thermischen Eigenschaften auch nur bedingt kompatibel zu den Eigenschaften dieser Substrate. Der Einsatz von Kunststoffsubstraten ist bedingt durch ihr geringes Gewicht und ihre vergleichsweise geringen Herstellungskosten beispielsweise für Brillen- und Uhrengläser von wachsender Bedeutung. Aufgrund der in diesen Einsatzbereichen auftretenden mechanischen und thermischen Belastungen werden an die benötigten Entspiegelungs- (Antireflex-) und/oder Antikratzschichten hohe Anforderungen im Hinblick auf deren Belastbarkeit und optische Qualität gestellt. So kann es bereits bei kleinsten Verformungen oder Temperaturänderungen aufgrund der unterschiedlichen Materialeigenschaften von Kunststoffsubstrat und Beschichtung zu verminderter Haftung und gegebenenfalls zum Abplatzen der Beschichtung kommen.

Konventionell wird das Kompatibilitätsproblem bei den Materialeigenschaften von Kunststoffsubstrat und Beschichtung entweder durch das Aufbringen von Hartlacken bzw. organischen Übergangsschichten in nasschemischen Verfahren oder durch den Einbau organischer Precursoren während der Beschichtung mit bekannten Vakuumbeschichtungsverfahren gelöst.

Ein zur letztgenannten Verfahrensgruppe gehöriges Verfahren ist beispielsweise in der EP-A-1 655 385 beschrieben. Dabei werden zum Ausbilden einer Übergangsschicht während eines Sputterprozesses organische Precursoren zielgerichtet in eine das Substrat umgebende Vakuumkammer geleitet. Diese organischen Precursoren werden während dem Aufbringen von SiOₓ-/SiN_{y}-Schichten durch Sputtern mit in diese eingebaut. Über die Konzentration der eingeleiteten Precursoren kann die Elastizität der Übergangsschicht angepasst werden und die Gefahr des Ablösens des nachfolgend aufgebrachten, im Allgemeinen sehr spröden anorganischen Schichtsystems wird vermindert.

Ein zur erstgenannten Verfahrensgruppe gehöriges Verfahren ist in der DE-102005059485 offenbart. Bei dem darin beschriebenen Verfahren wird zunächst eine flüssige Primer-Schicht, die eine Polymerlösung enthält, auf das Kunststoffsubstrat aufgebracht. Durch einen anschliessenden Trocknungsprozess wird diese Primer-Schicht ausgehärtet, bevor anschliessend darauf optische Funktionsschichten unter Verwendung eines Plasmas aufgebracht werden.

Problematisch erweist sich bei der Gruppe von nasschemischen Verfahren insbesondere der relativ lange Zeitraum zum Trocknen bzw. Aushärten der Primer- bzw. Lackschichten. Neben den dadurch bedingten langen Zykluszeiten für die Produktion von Beschichtungen, relativ hohen Anteilen von Handarbeit und damit verbundenen hohen Produktionskosten, erhöht sich auch die Gefahr der Ausbildung von optischen Störungen durch eine Einlagerung von Verunreinigungen.

Aufgrund unterschiedlicher Brechungsindizes von aufgebrachten Lacken und Kunststoffsubstraten, insbesondere bei hochbrechenden Kunststoffsubstraten, kann es zudem zu unerwünschten optischen Interferenzerscheinungen, wie den bekannten Newtonschen Ringen, kommen. Derartige Intensitätsschwankungen bei der Transmission wie auch Reflexion von Licht können sich störend auswirken. Da die Lackschichten eine relativ grosse Dicke in der Grössenordnung von einigen Mikrometern aufweisen, ist es auch nur sehr schwer möglich, diese unerwünschten Erscheinungen mittels Anpassungen der darüber aufgetragenen Funktionsschichtsysteme zu unterdrücken. Erschwert wird eine derartige Unterdrückung auch durch den Umstand, dass die Lacke nur mit einer begrenzten Auswahl von Brechungsindizes verfügbar bzw. ökonomisch sinnvoll herzustellen sind.

Darüber hinaus ist die Haftung (Adhäsion) von Lackschichten, die im Allgemeinen eine hohe Härte aufweisen, insbesondere an den hochbrechenden Kunststoffsubstraten, wie MR7, MR8 oder MR10, grundsätzlich mit Problemen verbunden. Bereits geringste Materialunterschiede der Kunststoffsubstrate, die im Rahmen der normalen Herstellungsprozesse nicht zu vermeiden sind, können zu einer verringerten Haftung der Lackschichten führen.

Daher besteht die zu lösende technische Aufgabe darin, ein Verfahren bzw. eine Vorrichtung zur Durchführung des Verfahrens bereitzustellen, welches bzw. welche es ermöglicht, Übergangsschichten mit verbesserten Haftungseigenschaften innerhalb kurzer Zykluszeiten und damit möglichst kostengünstig herzustellen.

Diese Aufgabe wird durch das erfindungsgemässe Verfahren nach Anspruch 1, eine Vorrichtung zur Durchführung dieses Verfahrens nach Anspruch 15 und eine Beschichtung, hergestellt in dem erfindungsgemässen Verfahren, nach Anspruch 19 gelöst. Besonders bevorzugte Ausführungsformen sind mit den in den abhängigen Ansprüchen aufgeführten Merkmalen ausgestattet.

Bei dem erfindungsgemässen Verfahren zur Beschichtung eines Kunststoffsubstrates wird eine Übergangsschicht, die der verbesserten Haftung nachfolgend aufgetragener optischer Schichten an das Kunststoffsubstrat dient, aus einem Haftvermittler ausgeformt. Der Haftvermittler wird dabei aus einer polymerisierbaren Flüssigkeit gebildet. Dazu wird die polymerisierbare Flüssigkeit auf die zu beschichtende Substratoberfläche des Kunststoffsubstrats gebracht, wo sie anschliessend zur Bildung des Haftvermittlers auspolymerisiert.

Der Polymerisationsvorgang kann unter Verwendung geeigneter Lichtquellen innerhalb weniger Sekunden bewirkt werden, so dass die Zykluszeiten zur Herstellung der Übergangsschichten nach dem erfindungsgemässen Verfahren im Vergleich zu den genannten konventionellen Verfahren wesentlich verkürzt sind. Die kürzeren Zykluszeiten wiederum ermöglichen einen höheren Automatisierungsgrad bei der Herstellung der gesamten Beschichtung und führen folglich zu einer Senkung der Produktionskosten bei einer gleichzeitig erhöhten optischen Qualität der Übergangsschichten. Zudem ist es möglich, die polymerisierbare Flüssigkeit und deren Polymerisationsbedingungen, beispielsweise die Intensität, das Spektrum und die Bestrahlungszeit des Lichts, an die spezifischen Materialeigenschaften der Kunststoffsubstrate anzupassen und dadurch eine verbesserte Haftung der Übergangsschicht an das Kunststoffsubstrat zu erreichen.

Eine entsprechende Vorrichtung zur Durchführung des erfindungsgemässen Verfahrens schliesst nacheinander eine Hochdruckreinigungseinrichtung zur Reinigung der Kunststoffsubstrats, eine Spin-Coatingeinrichtung zum Aufbringen der polymerisierbaren Flüssigkeit, eine UV-Bestrahlungseinrichtung, die dem Polymerisieren der polymerisierbaren Flüssigkeit und damit der Bildung der Übergangsschicht dient, und eine nachfolgende Beschichtungseinrichtung zum Aufbringen weiterer Schichten, insbesondere optischer Funktionsschichten, ein.

Bevorzugter Weise kann die Übergangsschicht dabei mit einer derartig geringen Dicke hergestellt werden, dass durch eine Anpassung nachfolgend aufgetragener Schichten unerwünschte Interferenzerscheinungen wenigstens in einem vorbestimmten Spektralbereich des Lichtes unterdrückt werden.

Wie bereits erwähnt ist das erfindungsgemässe Verfahren besonders für eine hohe Automatisierung geeignet. Diesem Fakt wird vorrichtungstechnisch unter anderem Rechnung dadurch getragen, indem die einzelnen Einrichtungen automatisch beschickt werden. Zur Überwachung und optimierten Steuerung des Fertigungsprozesses können Computer-unterstützte Mess-, Steuerungs- und Reglungseinheiten eingesetzt werden.

Nachfolgend wird eine besonders bevorzugte Ausführungsform des erfindungsgemässen Verfahrens und einer Vorrichtung zur Durchführung des Verfahrens anhand einer Zeichnung detailliert beschrieben. Es zeigen im Einzelnen rein schematisch:
- Fig. 1: in einer Schnittdarstellung ein Beispiel eines beschichteten Kunststoffsubstrats, welches nach dem erfindungsgemässen Verfahren mit einer durch einen Haftvermittler gebildeten Übergangsschicht ausgestattet ist;
- Fig. 2 - 4: Diagramme, in welchen die optische Reflektivität in Abhängigkeit von der Wellenlänge des durch beschichtete Kunststoffsubstrate hindurchtretenden Lichts bei Antireflexbeschichtungen, die einerseits auf einer durch den Haftvermittler gebildeten Übergangsschicht (kontinuierlichen Linien H, H1, H2) und andererseits auf einer konventionellen Lackschicht (gestrichelte Linien L, L1, L2) aufgebracht sind; und
- Fig. 5: ein Vorrichtungsschema der vom Kunststoffsubstrat bei der Durchführung des erfindungsgemässen Verfahrens in Pfeilrichtung durchlaufenen Einrichtungen.

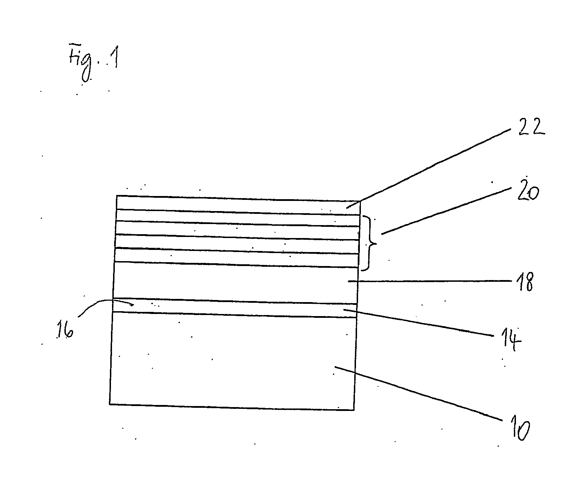

In Fig. 1 ist ein Kunststoffsubstrat 10 und einer darauf aufgebrachten Funktionsbeschichtung, die nach dem erfindungssgemässen Verfahren hergestellt worden ist, dargestellt. Unmittelbar auf einer Substratoberfläche 12 des Kunststoffsubstrats 10 ist dabei eine Übergangsschicht 14 aufgebracht. Die Übergangsschicht 14 ist aus einem Haftvermittler 16 geformt und weist eine Dicke zwischen 10 nm und 5000 nm, vorzugsweise zwischen 40 und 200 nm, besonders bevorzugt zwischen 60 nm und 100 nm, und bei der gezeigten Ausführungsform von etwa 100 nm auf. Diese Schichtdicke kann beispielsweise in einem Spin-Coating-Verfahren zur Herstellung der Übergangsschicht 14 durch Einstellung der Drehzahl, der Drehdauer und der Lösungsmittelkonzentration bzw. des Feststoffgehalts des Lösungsmittel-basierten Haftvermittlers 16 erzielt werden. In der Übergangsschicht 14 übernimmt der Haftvermittler 16 eine Brückenfunktion zu einer oberhalb angeordneten Hartschicht 18, indem der Haftvermittler 16 kunststoffsubstratseitig deutlich verbesserte Adhäsionseigenschaften als die Hartschicht 18 aufweist und zugleich über eine verbesserte Kompatibilität zu den Materialeigenschaften, insbesondere den mechanischen und thermischen Eigenschaften der Hartschicht 18 verfügt. So wird durch eine hohe Elastizität und dadurch gegebene Anpassungsfähigkeit der Übergangsschicht 14 an mechanisch oder thermisch verursachte Formveränderungen ein Ablösen der im Allgemeinen sehr spröden Hartschicht 18 verhindert.

Die Hartschicht 18 besteht im gezeigten Beispiel vorwiegend aus mittels Sputtertechnologie aufgebrachten SiO₂, in welches beispielsweise durch Einleiten organischer Precursoren während des Herstellungsprozesses elastische Anteile eingebaut sein können. Die Dicke der Hartschicht 18 beträgt zwischen 100 nm und 3000 nm, bei der gezeigten Ausführungsform etwa 800 nm. Die zu verwendende Dicke der Hartschicht 18 hängt stark von der spezifischen Materialzusammensetzung des Kunststoffsubstrats 10 ab. Im Allgemeinen gilt, dass eine höhere Dicke der Hartschicht 18 eine verbesserte Kratzbeständigkeit bewirkt.

Oberhalb der Hartschicht 18 gegenüberliegend der sandwichartig eingefassten Übergangsschicht 14 ist die eigentliche optische Funktionsschicht 20, die im gezeigten Beispiel einer Entspiegelung dient, angeordnet. Die optische Funktionsschicht 20 besteht von der Hartschicht 18 aus betrachtet aus einer 30 nm dicken Schicht Si₃N₄, einer 25 nm dicken Schicht SiO₂, einer 65 nm dicken Schicht aus Si₃N₄ und wiederum darüber liegend einer 95 nm dicken Schicht aus SiO₂. Das optische Funktionsschichtsystem 20 ist wie bereits erwähnt, lediglich beispielhaft angegeben und kann sowohl in seinen Dimensionen wie auch in seiner stofflichen Zusammensetzung je nach den gewünschten optischen Eigenschaften entsprechend angepasst sein.

Auf dem optischen Funktionsschichtsystem 20 gegenüberliegend der Hartschicht 18 ist eine hydrophobe Abschlussschicht 22 angeordnet, die einer Abweisung von Schmutz dient.

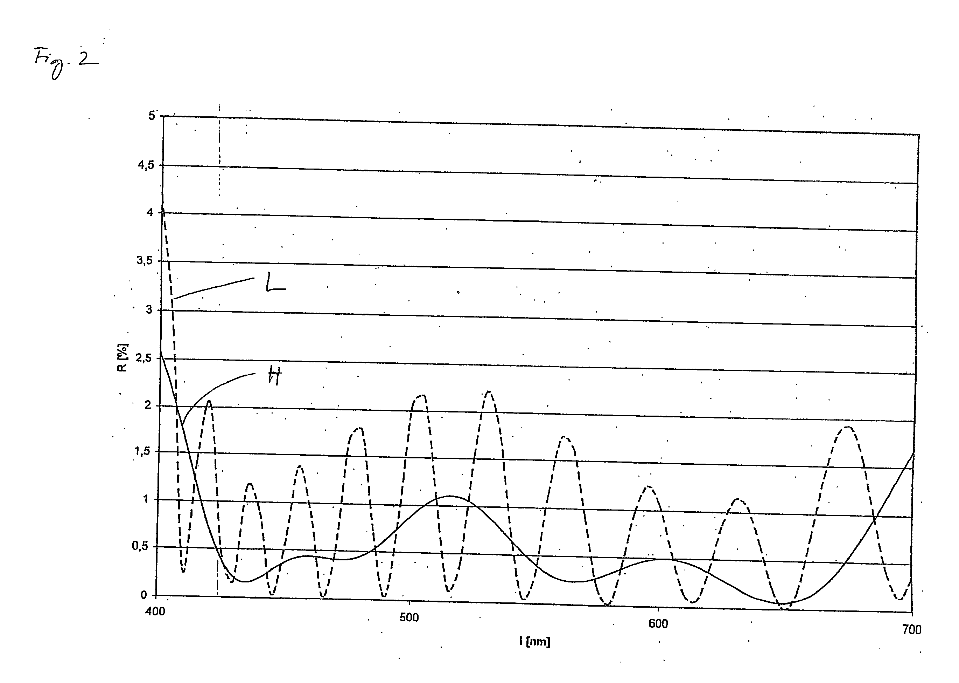

In dem Diagramm von Fig. 2 ist für ein optisches Funktionsschichtsystem 20 in Form einer Antireflexschicht die optische Reflektivität R (in Prozent) in Abhängigkeit von der Wellenlänge 1 (in nm) des durch das beschichtete Kunststoffsubstrat 10 hindurchtretende Licht dargestellt. Die beiden gezeigten Linien H, L beziehen sich dabei auf gleichartige Kunststoffsubstrate MR7 mit einem Brechungsindex von 1,67 und einem Antireflexschichtsystem bestehend aus SiN (Brechungsindex 1,97; Schichtdicke 29 nm), SiO₂ (Brechungsindex 1,47; Schichtdicke 26 nm), SiN (Brechungsindex 1,97; Schichtdicke 64 nm) und SiO₂ (Brechungsindex 1,47; Schichtdicke 94 nm).

Die durchgängige Linie H resultiert aus einer Reflektivitätsmessung eines unter Verwendung des erfindungsgemässen Verfahrens beschichteten Kunststoffsubstrates 10, bei welchem auf das Kunststoffsubstrat 10 zunächst eine 60 nm dicke Übergangsschicht 14 (Brechungsindex 1,56) mit dem Haftvermittler 16 und darüber zur Unterdrückung von unerwünschten Interferenzerscheinungen eine erste Anpassungsschicht aus SiO₂ (Schichtdicke 15 nm; Brechungsindex 1,47) und eine zweite Anpassungsschicht aus SiN (Schichtdicke 2 nm; Brechungsindex 1,97) aufgetragen wurden. Oberhalb dieser Anpassungsschichten befindet sich vor der eigentlichen Antireflexschicht noch eine Hartschicht 18 aus SiO₂ (Schichtdicke 740 nm; Brechungsindex 1,47).

Zur Ermittlung der gestrichelten Linie L wurde ein Kunststoffsubstrat 10 vermessen, bei welchem eine 3000 nm dicke Lackschicht (Brechungsindex 1,47) in einem konventionellen Beschichtungsverfahren unterhalb von der gleichen, oben spezifizierten Antireflexschicht aufgebracht wurde.

Wie dem Verlauf der Linien H, L in Fig. 2 zu entnehmen ist, oszilliert die Reflektivität R des erfindungsgemäss beschichteten Kunststoffsubstrats 10 (Linie H) deutlich weniger als die Reflektivität R von dem mit der Lackschicht versehenen Kunststoffsubstrat 10 (Linie L). Dies zeigt die erfolgreiche Unterdrückung von unerwünschten, sich als Oszillationen in der Reflektivität R manifestierenden Interferenzerscheinungen mit Hilfe der Anpassungsschichten.

Alternativ kann in einem weiteren Ausführungsbeispiel die Hartschicht 18 auch durch ein sogenanntes UV-Spin-Coating Verfahren aufgebracht werden. Mögliche, die dabei die Hartschicht 18 bildende UV-Lacke sind beispielsweise Lacke mit der Handelsbezeichnung HT 850 und SHC 178. Die Brechzahlen des Haftvermittlers 16 und der aus dem UV-Lack gebildeten Hartschicht 18 sind vorteilhafterweise so aufeinander abgestimmt, dass unerwünschte Interferenzen (beispielsweise die sogenannten Newtonschen Ringe) minimiert werden. Dies wird dadurch erreicht, dass der Brechungsindex des Haftvermittlers 16 grösser als der der Hartschicht 18 gewählt wird. Zudem ist der Brechungsindex n des Haftvermittlers 16 kleiner als der des Kunststoffsubstrates 10, so dass gilt: n(Substrat) > n(Haftvermittler) > n(Hartschicht). Zusätzlich sollte die Schichtdicke des Haftvermittlers 16 kleiner als 200 nm sein. Die Dicke der Hartschicht 18 ist grösser als die vom Haftvermittler 16 und liegt insbesondere zwischen 500 nm und 5000 nm.

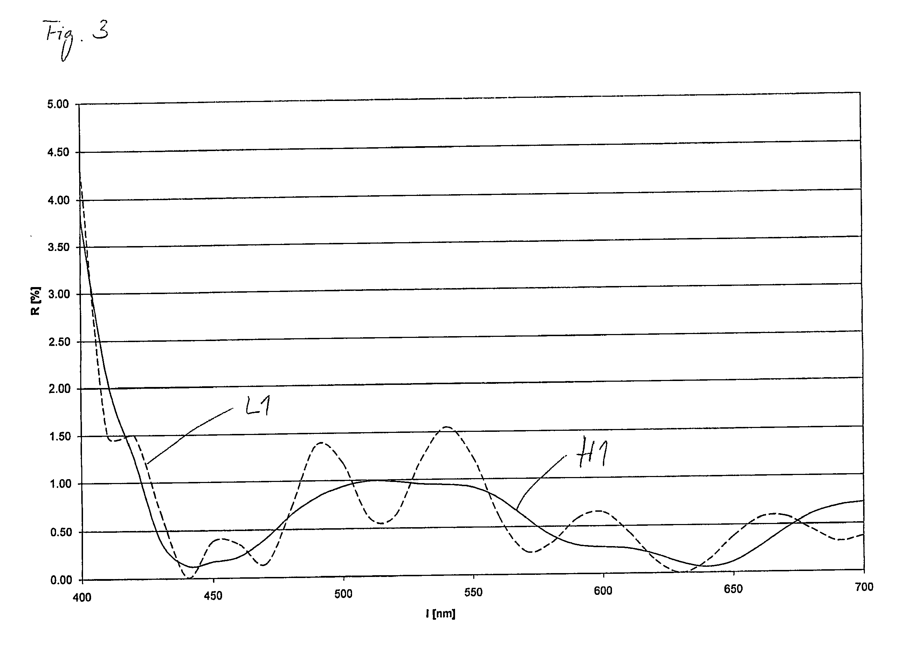

In Figur 3 dieses Ausführungsbeispiel die optische Reflektivität R (in Prozent) in Abhängigkeit von der Wellenlänge 1 (in nm) des durch das beschichtete Kunststoffsubstrat 10 hindurchtretende Licht dargestellt. Die beiden gezeigten Linien H1, L1 beziehen sich dabei auf gleichartige Kunststoffsubstrate MR8 mit einem Brechungsindex von 1,6.

Die durchgängige Linie H1 resultiert aus einer Reflekivitätsmessung eines unter Verwendung des erfindungsgemässen Verfahrens beschichteten Kunststoffsubstrates 10, bei welchem aus das Kunststoffsubstrat 10 zunächst eine 80 nm dicke Übergangsschicht (Brechungsindex von 1.55) mit dem Haftvermittler 16, darüber eine Hartschicht 18 (beispielsweise aus dem UV-Lack SHC 178 von der Firma Lens Technology International, La Mirada, CA 90638, USA) mit einem Brechungsindex von 1.51 und einer Dicke von 1500 nm und anschliessend fünf Sputterschichten bestehend aus SiO₂ (Brechungsindex 1.47; Schichtdicke 40 nm), Si₃N₄ (Brechungsindex 1.97; Schichtdicke 33 nm), SiO₂ (Brechungsindex 1.47; Schichtdicke 22 nm), Si₃N₄ (Brechungsindex 1.97; Schichtdicke 66 nm) und SiO₂ (Brechungsindex 1.47; Schichtdicke 95 nm) aufgetragen wurden.

Zur Ermittlung der gestrichelten Linie L1 wurde ein Kunststoffsubstrat 10 vermessen, bei welchem eine 3000 nm dicke Lackschicht (Brechungsindex 1,47) in einem konventionellen Beschichtungsverfahren unterhalb von der gleichen, oben spezifizierten Antireflexschicht aufgebracht wurde.

Wie dem Verlauf der Linien H1, L1 in Fig. 3 zu entnehmen ist, oszilliert die Reflektivität R des erfindungsgemäss beschichteten Kunststoffsubstrats 10 (Linie H1) deutlich weniger als die Reflektivität R von dem mit der Lackschicht versehenen Referenz-Kunststoffsubstrat 10 (Linie L1). Dies zeigt die erfolgreiche Unterdrückung von unerwünschten, sich als Oszillationen in der Reflektivität R manifestierenden Interferenzerscheinungen mit Hilfe der Kombination von spezifisch angepassten und aufeinander abgestimmten Schichten aus Haftvermittler 16, Hartschicht 18 und Sputterschichten.

Es ist bekannt, dass zum Erzielen der gewünschten optischen Eigenschaften für das zu beschichtende Kunststoffsubstrat 10 die Schichtdicken und -anordnungen von Anpassungs- bzw. nachfolgenden Funktionsschichten unter Berücksichtigung der Brechungsindizes vor der Auftragung rechnerisch ermittelt und optimiert werden können. Dies erweist sich in der Praxis für die nach dem erfindungsgemässen Verfahren hergestellten Beschichtungen aufgrund der geringen Schichtdicke der Übergangsschicht 14 von vorzugsweise kleiner als 300 nm als realisierbar und äussert vorteilhaft. Hingegen ist bei der Verwendung konventioneller Lackschichten eine derartige Unterdrückung unerwünschter Interferenzerscheinungen durch die Dicke der Lackschicht begrenzt und praktisch nicht möglich bzw. sinnvoll.

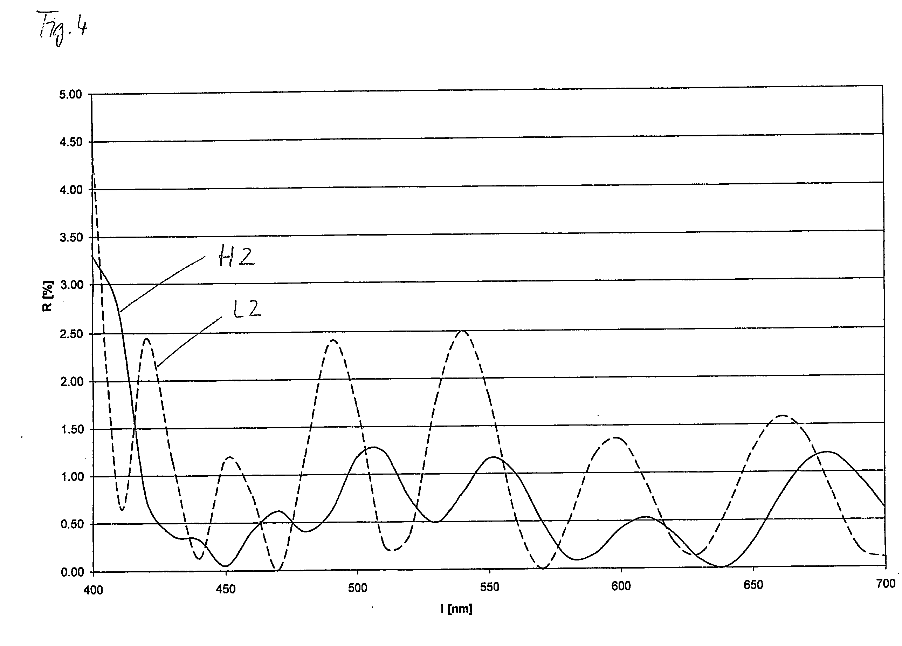

Beim Einsatz von Lacken ist eine Unterdrückung störender Interferenzerscheinungen zudem erschwert, da die Lacke lediglich in einer begrenzten Auswahl von Brechungsindizes zur Verfügung stehen. Insbesondere bei einem Brechungsindex von 1,67, der dem eines Kunststoffsubstratmaterials MR7 entspricht, oder höher kann eine Brechungsindexanpassung ("index matching") an das Substratmaterial nur noch mit sehr teuren Lacken oder gar nicht mehr erfolgen. Im Gegensatz dazu kann bei einer Beschichtung nach dem erfindungsgemässen Verfahren anstatt der Aufbringung von Haftvermittlern 16 mit verschiedenen Brechungsindizes die Dicke der Übergangsschicht 14 oder vorteilhafter Weise die Dicke der nachfolgend aufgebrachten Schichten, insbesondere der Anpassungsschichten bzw. der Schichten des optischen Funktionsschichtsystems 20, entsprechend angepasst werden. Das erfindungsgemässe Verfahren zur Herstellung einer derartigen Beschichtung ist hinsichtlich dieses Aspekts besonders kosteneffizient, zeitsparend, präzise und ermöglicht Beschichtungen in hoher optischer Qualität. Sowohl dem Diagramm in Fig. 2 als auch dem Diagramm in Fig. 3 ist zu entnehmen, dass eine über entsprechende Spektralbereiche gemittelte (beispielsweise 550 nm bis 650 nm) Reflektivität R der durchgängigen Linie H einen geringeren Wert als die der gestrichelten Linie L aufweist. Dieses für die Linie H mittels des erfindungsgemässen Verfahrens bewirkte Verhalten ist gerade bei Antireflexbeschichtungen besonders vorteilhaft. In Figur 4 wird ein weiteres Ausführungsbeispiel dargestellt. Dabei ist für ein optisches Funktionsschichtsystem 20 in Form einer Antireflexschicht die optische Reflektivität R (in Prozent) in Abhängigkeit von der Wellenlänge 1 (in nm) des durch das beschichtete Kunststoffsubstrat 10 hindurchtretende Licht dargestellt. In der gezeigten Ausführungsform werden für Kunststoffsubstrate 10 mit einem Brechungsindex von 1.67 und höher zur Brechungsindexanpassung zwischen Haftvermittler 16 und Hartschicht 18 Sputterschichten eingefügt, wobei die Anzahl, Art und Dicke der Sputterschichten jeweils an die Kombination aus Kunststoffsubstrat 10, Haftvermittler 16 und Hartschicht 18 angepasst werden.

Ein mögliches Beispiel für eine solche Ausführungsform ist ein Kunststoffsubstrat 18 mit einem Brechungsindex von 1.74, auf das zunächst ein Haftvermittler 16 mit einem Brechungsindex von 1.55 und einer Dicke von 40 nm, anschliessend zwei mittels Sputtern aufgebrachte erste Sputterschichten bestehend aus SiO₂ (Brechungsindex 1.47; Schichtdicke 5 nm) und Si₃N₄ (Brechungsindex 1.97; Schichtdicke 6 nm), wiederum anschliessend eine Hartschicht 18 aus einem UV-Lack (beispielsweise SHC 178 von der Firma Lens Technology International, La Mirada, CA 90638, USA) mit einem Brechungsindex von 1.51 und einer Dicke von 1500 nm und schliesslich noch fünf weitere mittels Sputtern aufgebrachte zweiten Sputterschichten bestehend aus SiO₂ (Brechungsindex 1.47; Schichtdicke 40 nm), Si₃N₄ (Brechungsindex 1.97; Schichtdicke 33 nm), SiO₂ (Brechungsindex 1.47; Schichtdicke 22 nm), Si₃N₄ (Brechungsindex 1.97; Schichtdicke 66 nm) und SiO₂ (Brechungsindex 1.47; Schichtdicke 95 nm) aufgetragen werden.

Zur Ermittlung der gestrichelten Linie L2 wurde identisches ein Kunststoffsubstrat 10 vermessen, bei welchem kein Haftvermittler 16 und keine Sputterschichten vor der Hartschicht 18, in diesem Fall der UV-Lackschicht, aufgetragen wurde.

Wie dem Verlauf der Linien H2, L2 in Fig. 4 zu entnehmen ist, oszilliert auch hier die Reflektivität R des erfindungsgemäss beschichteten Kunststoffsubstrats 10 (Linie H2) deutlich weniger als die Reflektivität R des Referenzsubstrats (Linie L2). Dies zeigt die erfolgreiche Unterdrückung von unerwünschten, sich als Oszillationen in der Reflektivität R manifestierenden Interferenzerscheinungen mit Hilfe der angepassten Kombination aus der Schicht des Haftvermittlers 16, den ersten Sputterschichten, der Hartschicht 18 und den zweiten Sputterschichten.

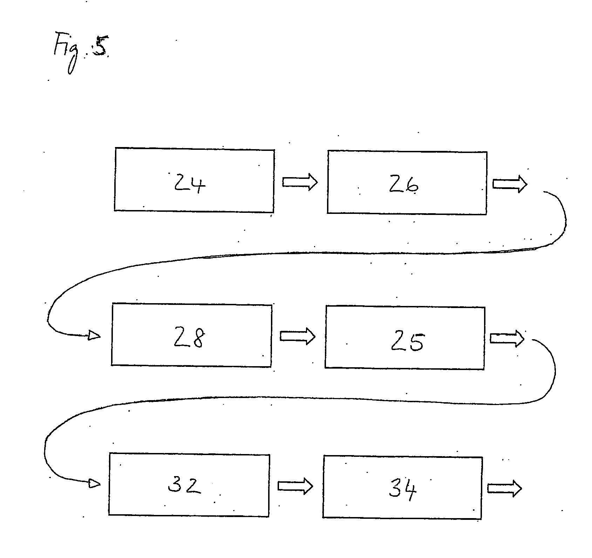

Nachfolgend wird das erfindungsgemässe Verfahren anhand des in Fig. 5 dargestellten Vorrichtungsschemas mit in Prozessrichtung weisenden Pfeilen detailliert erläutert. Das zu verarbeitende Kunststoffsubstrat 10, beispielsweise ein aus dem Kunststoff MR8 geformtes Brillenglas, ist auf seiner konvexen Vorderseite bereits mittels Tauchlack in einer Massenproduktion gehärtet und auf seiner konkaven Rückseite in einer Einzelanfertigung durch Fräsen, Schleifen, Polieren usw. derart modifiziert, dass es die geforderte optische Wirkung an das Brillenglas korrekt erfüllt.

In einem ersten Verfahrensschritt wird dieses Kunststoffsubstrat 10 mittels einer Hochdruckreinigungseinrichtung 24, insbesondere einer Hochdruckdampfreinigungseinrichtung, von gegebenenfalls anhaftenden Verunreinigungen befreit.

Nachfolgend wird in einer Spin-Coatingeinrichtung (Rotationsbeschichtungseinrichtung) 26 auf der konkaven, noch zu beschichtenden Rückseite des Kunststoffsubstrates 10 0,1 ml bis 5 ml, vorzugsweise 1 ml einer polymerisierbaren Flüssigkeit zur Bildung des Haftvermittlers 16, der die Übergangsschicht 14 ausformt, aufgespritzt. Durch Rotation um eine im Wesentlichen rechtwinklig zur Substratoberfläche 12 und wenigstens nahezu durch den Massenschwerpunkt des Kunststoffsubstrats 10 verlaufende Drehachse mit einer Rotationsgeschwindigkeit zwischen 200 Umdrehungen pro Minute bis 2000 Umdrehungen pro Minute, vorzugsweise von 500 Umdrehungen pro Minute für eine Zeitdauer von etwa 10 Sekunden wird die polymerisierbare Flüssigkeit gleichmässig auf der konkaven Rückseite verteilt.

Natürlich ist es auch möglich, an Stelle der Rotationsbeschichtung auch andere Verfahren zur Bildung einer gleichmässigen Schicht der polymerisierbaren Flüssigkeit auf dem Kunststoffsubstrat 10 zu erzeugen, beispielsweise ein Tauchverfahren.

Bei der polymerisierbaren Flüssigkeit zur Bildung des Haftvermittlers 16 in den vorgängig beschriebenen Ausführungsformen handelt es sich um eine Flüssigkeit organischer Monomere, vorzugsweise auf der Basis von Acrylaten oder Epoxyden, beispielsweise dem Produkt P-201B der Firma Lens Technology International, La Mirada, CA 90638, USA. Die polymerisierbare Flüssigkeit kann bevorzugt unter Einstrahlung von Licht, insbesondere von ultraviolettem (UV) Licht, das heisst Licht mit wesentlichen Energieanteilen im ultravioletten Teil seines Spektrums, auspolymerisiert werden. Durch die Polymerisation zur Bildung des Haftvermittlers 16 wird die polymerisierbare Flüssigkeit "gehärtet" und eine starke Adhäsion der durch die Polymerisation erzeugten Makromoleküle an die darunter liegende Substratoberfläche 12 des Kunststoffsubstrats 10 bewirkt.

Die Polymerisation durch die Bestrahlung mit ultraviolettem Licht wird in der UV-Bestrahlungseinrichtung 28, zu welcher die Kunststoffsubstrate vorzugsweise automatisiert mittels nicht gezeigter Transporteinrichtung befördert werden, durchgeführt. Die UV-Bestrahlungseinrichtung 28 weist eine UV-Strahlungsquelle, vorzugsweise eine UV-Lampe auf. Das mit der polymerisierbaren Flüssigkeit beschichtete Kunststoffsubstrat 10 wird für eine Zeit von 0,1 s bis 60 s, vorzugsweise von etwa 10 s, bei einer Lichtintensität von 1 W/cm² bis 200 W/cm², vorzugsweise von etwa 100 W/cm² mit ultraviolettem Licht bestrahlt. Diese Bestrahlungsparameter wie die gesamten Polymerisationsbedingungen sind natürlich der polymerisierbaren Flüssigkeit, dem jeweiligen Kunststoffsubstrat 10 und den gewünschten Eigenschaften der Übergangsschicht 14 anzupassen.

In einem nächsten Verfahrensschritt wird nun die konvexe Vorderseite des mit der Übergangsschicht 14 beschichteten Kunststoffsubstrats 10, welche unter anderem durch einen Haltemechanismus in der Spin-Coatingeinrichtung 26 verunreinigt sein kann, mittels einer weiteren Hochdruckreinigungseinrichtung 25, vorzugsweise einer Hochdruckdampfreinigungseinrichtung, gesäubert. Dieser Verfahrensschritt ist optional und kann gegebenenfalls auch zu einem anderen Zeitpunkt des Herstellungsverfahrens erfolgen oder sogar ganz entfallen. Ebenfalls optional kann das Kunststoffsubstrat 10 anschliessend in einer Wasserentzugseinrichtung, beispielsweise in einem Durchlauf-Infrarotofen, getrocknet werden.

Auf die derart konditionierte Übergangsschicht 14 des Kunststoffsubstrats 10 wird nun das optische Funktionsschichtsystem 20 in einer Beschichtungseinrichtung 32 aufgetragen. In der Beschichtungseinrichtung 32 kann die Beschichtung, beispielsweise zum Aufbau des in Fig. 1 gezeigten optischen Funktionsschichtsystems 20 mittels Sputter- oder CVD-Beschichtungsverfahren, insbesondere einem in der EP-A-1 275 751 oder EP-A-1 655 385 offenbarten Verfahren erfolgen. Die Schichtdicken der einzelnen Schichten des optischen Funktionsschichtsystems 20 können dabei dem spezifischen Brechungsindex des Kunststoffsubstrats 10 bzw. weiteren Funktions- oder Anwendungsanforderungen angepasst werden, um der Beschichtung optimale optische Eigenschaften zu verleihen.

Die Beschichtung erfolgt dabei vorzugsweise nicht nur auf der mit der Übergangsschicht 14 versehenden konkaven Rückseite, sondern ebenfalls und gegebenenfalls auch gleichzeitig auf der beispielsweise mit einem Tauchlack gehärteten konvexen Vorderseite des Kunststoffsubstrats 10.

Anschliessend wird die im Zusammenhang mit Fig. 1 beschriebene hydrophobe Abschlussschicht 22 entweder in der Beschichtungseinrichtung 32 oder einer weiteren Beschichtungseinrichtung 34 aufgebracht.

Aufgrund der relativ kurzen Zykluszeiten bei der Durchführung des erfindungsgemässen Verfahrens, bedingt insbesondere durch die kurze Zeit zur Polymerisation der Übergangsschicht 14, eignet sich das genannte Verfahren sowie die beschriebene Vorrichtung zur vollständigen Automatisierung des Herstellungsprozesses. Das Verfahren, das in einer automatisierten Form, vorzugsweise computerunterstützt abläuft, ist insbesondere für die Beschichtung von Kunststoffgläsern für Brillen oder Uhren, aber auch für optische Elemente des wissenschaftlichen Gerätebaus, der Verpackungs- oder Energietechnik geeignet.

## Patentansprüche

1. Verfahren zur Beschichtung eines Kunststoffsubstrats (10), bei welchem eine übergangsschicht (14), die insbesondere einer verbesserten Haftung von einer über ihr aufzubringenden Schicht bzw. einem Schichtsystemen an das Kunststoffsubstrat (10) dient, auf das Kunststoffsubstrat (10), aufgebracht wird, wobei eine polymerisierbare Flüssigkeit auf eine zu beschichtende Substratoberfläche (12) des Kunststoffsubstrats (10) aufgebracht wird und dort zu einem die Übergangsschicht (14) formenden Haftvermittler (16) auspolymerisiert, **dadurch gekenzeichnet, dass** auf die Übergangeschicht (14) eine Hartschicht (18) aufgebracht wird und der Brechungsindex des Haftvermittlers (16) grösses als des Brechungsindex des Hartschicht (18) und kleiner als des Brechungsindex des Kuntstoff substrats (10) gewählt wird.

2. Verfahren nach Anspruch 1, **dadurch gekennzeichnet, dass** die polymerisierbare Flüssigkeit mittels Spin-Coating gleichmässig über die Substratoberfläche (12) verteilt wird.

3. Verfahren nach Anspruch 2, **dadurch gekennzeichnet, dass** beim Spin-Coating 0,5 ml bis 5,0 ml, vorzugsweise 1,0 ml der polymerisierbaren Flüssigkeit zur Bildung des Haftvermittlers (16) auf die Substratoberfläche (12) aufgebracht werden und das Kunststoffsubstrat (10) anschliessend mit einer Rotationsgeschwindigkeit von 200 Umdrehungen/min bis 2000 Umdrehungen/min, vorzugsweise mit 500 Umdrehungen/min, um eine im Wesentlichen rechtwinklig zur Substratoberfläche (12) orientierte und vorzugsweise wenigstens nahezu durch das Massenzentrum des Kunststoffsubstrats (10) verlaufende Drehachse rotiert wird.

4. Verfahren nach einem der Ansprüche 1 bis 3, **dadurch gekennzeichnet, dass** die Polymerisation der polymerisierbaren Flüssigkeit zur Bildung des Haftvermittlers (16) durch Licht, vorzugsweise durch ultraviolettes (UV) Licht, bewirkt wird.

5. Verfahren nach Ansprüche 4, **dadurch gekennzeichnet, dass** die Polymerisation unter ultraviolettem (UV) Licht von einer UV-Strahlungsquelle, vorzugsweise einer UV-Lampe, bei einer Bestrahlungszeit von 0,1 s bis 60 s, vorzugsweise von etwa 10 s mit einer Lichtintensität von 1 W/cm² bis 200 W/cm², vorzugsweise von 100 W/cm² erfolgt.

6. Verfahren nach einem der Ansprüche 1 bis 5, **dadurch gekennzeichnet, dass** die Schichtdicke des Haftvermittlers (16) 10 nm bis 5000 nm, vorzugsweise 40 nm bis 200 nm, besonders bevorzugt 60 nm bis 100 nm beträgt.

7. Verfahren nach einem der Ansprüche 1 bis 6, **dadurch gekennzeichnet, dass** unerwünschte optische Interferenzerscheinungen durch eine rechnerisch vorbestimmte Anpassung von Schichtdicken des oberhalb der Obergangsschicht (14) aufzubringenden Schichtsystems, insbesondere eines Schichtsystems von Anpassungsschichten, unterdrückt werden.

8. Verfahren nach einem der Ansprüche 1 bis 7, **dadurch gekennzeichnet, dass** die zu beschichtende Substratoberfläche (12) vor dem Aufbringen der Übergangsschicht (14) mittels Hochdruckdampfreinigung gereinigt wird.

9. Verfahren nach einen der Ansprüche 1 bis 8, **dadurch gekennzeichnet, dass** zwischen die Übergangsschicht (14) aus dem Haftvermittler (16) und die Hartschicht (18) wenigstens eine mittels Sputtern aufgebrachte Sputterschicht aufgetragen wird.

10. Verfahren nach einem der Ansprüche 1 bis 9, **dadurch gekennzeichnet, dass** die Schicht bzw. das Schichtsystem, die bzw. das oberhalb der Übergangsschicht (14) aufgebracht wird, ein optisches Funktionsschichtsystem (20) mit einer zur Entspiegelung dienenden Antireflexionsschicht aufweist.

11. Verfahren nach einem der Ansprüche 1 bis 10, **dadurch gekennzeichnet, dass** die Schicht bzw. das Schichtsystem, die bzw. das oberhalb der Übergangsschicht (14) aufgebracht wird, eine hydrophobe Abschlussschicht (22) aufweist.

12. Verfahren nach einem der Ansprüche 1 bis 11, **dadurch gekennzeichnet, dass** die Schicht bzw. das Schichtsystem oberhalb der Übergangsschicht (14) mittels Sputtern, chemischer Bedampfung (CVD), CVD-unterstütztem Sputtern, vorzugsweise Sputtern oder UV-Spincoating aufgebracht wird.

13. Verfahren nach einem der Ansprüche 1 bis 12, **dadurch gekennzeichnet, dass** die Schichtdicke der Hartschicht (18) grösser ist als die Schichtdicke des Haftvermittlers (16) und 500 nm bis 5000 nm beträgt.

14. Verfahren nach einem der Ansprüche 1 bis 13, **dadurch gekennzeichnet, dass** die Hartschicht (18) durch ein UV-Spin-Coating Verfahren aufgebracht wird.

15. Vorrichtung zur Durchführung des Verfahrens nach einem der Ansprüche 1 bis 14, die eine Hochdruckreinigungseinrichtung (24), eine Spin-Coatingeinrichtung (26), eine UV- Bestrahlungseinrichtung (28) und eine Beschichtungseinrichtung (32) aufweist, welche vorbestimmt sind, in der genannten Reihenfolge vom Kunststoffsubstrat (10) durchlaufen zu werden.

16. Vorrichtung nach Anspruch 15, **dadurch gekennzeichnet, dass** sie wenigstens teilweise automatisiert, vorzugsweise vollständig automatisiert, betrieben und der Produktionsprozess bevorzugt Computer-unterstützt gesteuert wird.

17. Vorrichtung nach Ansprüche 15 oder 16, **dadurch gekennzeichnet, dass** die Beschichtungseinrichtung (32) zur Beschichtung mittels Sputtern, chemischer Bedampfung (CVD) oder CVD-unterstütztem Sputtern, vorzugsweise Sputtern, vorbestimmt ist.

18. Vorrichtung nach einem der Ansprüche 15 bis 17, **dadurch gekennzeichnet, dass** die Beschichtungseinrichtung (32) oder eine weitere zur Vorrichtung gehörige Beschichtungseinrichtung (34) zum Aufbringen einer hydrophoben Abschlussschicht (22) vorbestimmt ist.

19. Beschichtung hergestellt nach einem Verfahren gemäss einem der Ansprüche 1 bis 14.

20. Beschichtung nach Anspruch 19, **dadurch gekennzeichnet, dass** die Übergangsschicht (14) eine Schichtdicke von weniger als 500 nm, vorzugsweise von weniger als 300 nm aufweist, so dass unerwünschte optische Interferenzerscheinungen durch das oberhalb der Übergangsschicht (14) aufzubringende Schichtsystem, insbesondere das Schichtsystem von Anpassungsschichten oder das optische Funktionsschichtsystem (20), mit rechnerisch optimierten Schichtdicken, unterdrückbar sind.

## Claims

1. Method for coating a plastic substrate (10), on which a transition layer (14) which is used in particular for improved bonding of a layer or layer system, to be applied over it, onto the plastic substrate (10) is applied onto the plastic substrate (10), a polymerizable liquid being applied onto a substrate surface (12) to be coated on the plastic substrate (10) and is polymerized there into a bonding agent (16) which forms the transition layer (14), **characterized in that** a hard layer (18) is applied onto the transition layer (14) and the refractive index of the bonding agent (16) is chosen to be greater than the refractive index of the hard layer (18) and less than the refractive index of the plastic substrate (10).

2. Method according to Claim 1, **characterized in that** the polymerizable liquid is distributed uniformly over the substrate surface (12) by means of spin coating.

3. Method according to Claim 2, **characterized in that** from 0.5 ml to 5.0 ml, preferably 1.0 ml of the polymerizable liquid for forming the bonding agent (16) is applied onto the substrate surface (12) and the plastic substrate (10) is subsequently rotated with a rotation speed of from 200 revolutions/min to 2000 revolutions/min, preferably at 500 revolutions/min, about a rotation axis essentially oriented perpendicularly to the substrate surface (12) and preferably at least substantially extending through the center of mass of the plastic substrate (10).

4. Method according to one of Claims 1 to 3, **characterized in that** the polymerization of the polymerizable liquid to form the bonding agent (16) is induced by light, preferably by ultraviolet (UV) light.

5. Method according to Claim 4, **characterized in that** the polymerization is carried out under ultraviolet (UV) light from a UV radiation source, preferably a UV lamp, with an exposure time of from 0.1 s to 60 s, preferably about 10 s, with a light intensity of from 1 W/cm² to 200 W/cm², preferably 100 W/cm²_{.}

6. Method according to one of Claims 1 to 5, **characterized in that** the layer thickness of the bonding agent (16) is from 10 nm to 5000 nm, preferably from 40 nm 200 nm, particularly preferably from 60 nm to 100 nm.

7. Method according to one of Claims 1 to 6, **characterized in that** undesired optical interference phenomena are suppressed by computationally predetermined adaptation of layer thicknesses of the layer system, in particular a layer system of matching layers, to be applied above the transition layer (14).

8. Method according to one of Claims 1 to 7, **characterized in that** the substrate surface (12) to be coated is cleaned by means of high-pressure vapor cleaning before applying the transition layer (14).

9. Method according to one of Claims 1 to 8, **characterized in that** at least one sputtered layer applied by means of sputtering is applied between the transition layer (14) of the bonding agent (16) and the hard layer (18).

10. Method according to one of Claims 1 to 9, **characterized in that** the layer or layer system which is applied above the transition layer (14) has an optical functional layer system (20) with an antireflection layer used for glare suppression.

11. Method according to one of Claims 1 to 10, **characterized in that** the layer or layer system which is applied above the transition layer (14) has a hydrophobic cover layer (22).

12. Method according to one of Claims 1 to 11, **characterized in that** the layer or layer system is applied above the transition layer (14) by means of sputtering, chemical vapor deposition (CVD), CVD-enhanced sputtering, preferably sputtering or UV spin coating.

13. Method according to one of Claims 1 to 12, **characterized in that** the layer thickness of the hard layer (18) is greater than the layer thickness of the bonding agent (16) and is from 500 nm to 5000 nm.

14. Method according to one of Claims 1 to 13, **characterized in that** the hard layer (18) is applied by a UV spin coating method.

15. Device for carrying out the method according to one of Claims 1 to 14, which has a high-pressure cleaning instrument (24), a spin coating instrument (26), a UV irradiation instrument (28) and a coating instrument (32), which are adapted for the plastic substrate (10) to pass through in the order mentioned.

16. Device according to Claim 15, **characterized in that** it is operated in an at least partially automated, preferably fully automated fashion, and the production process is preferably controlled with computer assistance.

17. Device according to Claim 15 or 16, **characterized in that** the coating instrument (32) is adapted for coating by means of sputtering, chemical vapor deposition (CVD), CVD-enhanced sputtering, preferably sputtering.

18. Device according to one of Claims 15 to 17, **characterized in that** the coating instrument (32) or a further coating instrument (34) belonging to the device is adapted to apply a hydrophobic cover layer (22).

19. Coating produced by a method according to one of Claims 1 to 14.

20. Coating according to Claim 19, **characterized in that** the transition layer (14) has a layer thickness of less than 500 nm, preferably less than 300 nm, so that undesired optical interference phenomena can be suppressed by the layer system to be applied above the transition layer (14), in particular the layer system of matching layers or the optical functional layer system (20), with computationally optimized layer thicknesses.

## Revendications

1. Procédé pour le revêtement d'un substrat en matériau synthétique (10), dans lequel une couche de transition (14) qui sert en particulier à une adhérence améliorée d'une couche ou, selon le cas, d'un système de couches à appliquer sur celle-ci sur le substrat en matériau synthétique (10), est appliquée sur le substrat en matériau synthétique (10), un liquide polymérisable étant appliqué sur une surface (12) du substrat en matériau synthétique (10) à revêtir et y polymérisant en un promoteur d'adhérence (16) formant la couche de transition (14), **caractérisé en ce qu'**une couche dure (18) est appliquée sur la couche de transition (14) et l'indice de réfraction du promoteur d'adhérence (16) est choisi supérieur à l'indice de réfraction de la couche dure (18) et inférieur à l'indice de réfraction du substrat en matériau synthétique (10).

2. Procédé selon la revendication 1, **caractérisé en ce que** le liquide polymérisable est réparti par revêtement à la tournette régulièrement à la surface (12) du substrat.

3. Procédé selon la revendication 2, **caractérisé en ce qu'**on applique, lors du revêtement à la tournette, 0,5 ml à 5,0 ml, de préférence 1,0 ml du liquide polymérisable pour la formation du promoteur d'adhérence (16) sur la surface (12) du substrat et le substrat en matériau synthétique (10) est ensuite mis en rotation à une vitesse de rotation de 200 t/min à 2000 t/min, de préférence de 500 t/min, autour d'un axe de rotation orienté de manière essentiellement perpendiculaire à la surface (12) du substrat et passant de préférence au moins approximativement par le centre de masse du substrat en matériau synthétique (10).

4. Procédé selon l'une quelconque des revendications 1 à 3, **caractérisé en ce que** la polymérisation du liquide polymérisable pour la formation du promoteur d'adhérence (16) est provoquée par la lumière, de préférence de la lumière ultraviolette (UV).

5. Procédé selon la revendication 4, **caractérisé en ce que** la polymérisation sous lumière ultraviolette (UV) est réalisée par une source de rayonnement UV, de préférence une lampe UV, à un temps d'irradiation de 0,1 s à 60 s, de préférence d'environ 10 s à une intensité lumineuse de 1 W/cm² à 200 W/cm², de préférence de 100 W/cm².

6. Procédé selon l'une quelconque des revendications 1 à 5, **caractérisé en ce que** l'épaisseur de la couche de promoteur d'adhérence (16) est de 10 nm à 5000 nm, de préférence de 40 nm à 200 nm, de manière particulièrement préférée de 60 nm à 100 nm.

7. Procédé selon l'une quelconque des revendications 1 à 6, **caractérisé en ce que** des phénomènes d'interférence optique non souhaités sont supprimés par une adaptation déterminée au préalable par calcul des épaisseurs de couche du système de couches à appliquer au-dessus de la couche de transition (14), en particulier d'un système de couches d'adaptation.

8. Procédé selon l'une quelconque des revendications 1 à 7, **caractérisé en ce que** la surface de substrat (12) à revêtir est nettoyée avant l'application de la couche de transition (14) par nettoyage à la vapeur sous haute pression.

9. Procédé selon l'une quelconque des revendications 1 à 8, **caractérisé en ce qu'**au moins une couche pulvérisée appliquée par pulvérisation est réalisée entre la couche de transition (14) en promoteur d'adhérence (16) et la couche dure (18).

10. Procédé selon l'une quelconque des revendications 1 à 9, **caractérisé en ce que** la couche ou, selon le cas, le système de couches, qui est appliqué(e) au-dessus de la couche de transition (14) présente un système de couches fonctionnel optique (20) avec une couche antiréfléchissante servant à l'antireflet.

11. Procédé selon l'une quelconque des revendications 1 à 10, **caractérisé en ce que** la couche ou, selon le cas, le système de couches qui est appliqué(e) au-dessus de la couche de transition (14) présente une couche de finition (22) hydrophobe.

12. Procédé selon l'une quelconque des revendications 1 à 11, **caractérisé en ce que** la couche ou, selon le cas, le système de couches au-dessus de la couche de transition (14) est appliquée par pulvérisation, vaporisation chimique (CVD), pulvérisation soutenue par CVD, de préférence par pulvérisation ou par revêtement à la tournette aux UV.

13. Procédé selon l'une quelconque des revendications 1 à 12, **caractérisé en ce que** l'épaisseur de la couche dure (18) est supérieure à l'épaisseur de couche du promoteur d'adhérence (16) et est de 500 nm à 5000 nm.

14. Procédé selon l'une quelconque des revendications 1 à 13, **caractérisé en ce que** la couche dure (18) est appliquée par un procédé de revêtement à la tournette aux UV.

15. Dispositif pour la réalisation du procédé selon l'une quelconque des revendications 1 à 14, qui présente un dispositif de nettoyage à haute pression (24), un dispositif de revêtement à la tournette (26), un dispositif d'irradiation aux UV (28) et un dispositif de revêtement (32), qui sont prévus pour être traversés dans l'ordre mentionné par le substrat en matériau synthétique (10).

16. Dispositif selon la revendication 15, **caractérisé en ce qu'**il est exploité de manière au moins partiellement automatisée, de préférence complètement automatisée et le procédé de production est de préférence contrôlé par un ordinateur.

17. Dispositif selon les revendications 15 ou 16, **caractérisé en ce que** le dispositif de revêtement (32) est prévu pour le revêtement par pulvérisation, vaporisation chimique (CVD) ou pulvérisation soutenue par CVD, de préférence par pulvérisation.

18. Dispositif selon l'une quelconque des revendications 15 ou 17, **caractérisé en ce que** le dispositif de revêtement (32) ou un autre dispositif de revêtement (34) appartenant au dispositif est prévu pour l'application d'une couche de finition (22) hydrophobe.

19. Revêtement réalisé selon un procédé selon l'une quelconque des revendications 1 à 14.

20. Revêtement selon la revendication 19, **caractérisé en ce que** la couche de transition (14) présente une épaisseur de couche inférieure à 500 nm, de préférence inférieure à 300 nm, de manière telle que des phénomènes d'interférence optiques non souhaités sont supprimés par le système de couches à appliquer au-dessus de la couche de transition (14), en particulier le système de couches d'adaptation ou le système de couches fonctionnelles optiques (20), présentant des épaisseurs de couches optimisées par calcul.
